# EUROPEAN PATENT APPLICATION

(11) **EP 4 545 598 A1**
(43) Date of publication of application: **30.04.2025**
(21) Application number: 23827273.6
(22) Date of filing: 22.06.2023
(51) Int. Cl.: C08L 25/04, C08K 3/26, C08K 5/098, C08K 5/10, C08K 5/20, C08L 9/06, C08L 25/10, C08L 51/04, C08L 55/02

(54) **RESIN COMPOSITION AND MOLDED ARTICLE OF SAME**

(30) Priority: 24.06.2022 JP 2022101913; 25.01.2023 JP 2023009169
(71) Applicant: Denka Company Limited, Tokyo 103-8338 (JP)
(72) Inventor: KAMIMAKI, Eri, Tokyo 103-8338 (JP); ISE, Kanae, Tokyo 103-8338 (JP); MOTOI, Daisuke, Tokyo 103-8338 (JP); KOBAYASHI, Hirotaka, Tokyo 103-8338 (JP)
(74) Representative: Hoffmann Eitle
(86) International application number: PCT/JP2023/023177
(87) International publication number: WO 2023/249091

(57) **Abstract**

A resin composition and a molded article molded therefrom is provided, the resin composition containing eggshell powder, having good properties in terms of tensile modulus and tensile elongation at break, and also having excellent moldability. The resin composition contains eggshell powder (A), a polystyrene-based resin (B), and an additive (C), wherein: a ratio of the eggshell powder (A) with respect to a total of 100 parts by mass of the eggshell powder (A) and the polystyrene-based resin (B) is 20 parts by mass or more; and the additive (C) includes at least one compound selected from among fatty acid amides (c1), fatty acid sodium salts (c2), and fatty acid esters (c3), the total content of the fatty acid amides (c1), the fatty acid sodium salts (c2), and the fatty acid esters (c3) with respect to the overall mass of the additive (C) is more than 50 mass%, and the content of the additive (C) with respect to a total of 100 parts by mass of the eggshell powder (A) and the polystyrene-based resin (B) is 10 parts by mass or less.

## Description

### TECHNICAL FIELD

The present invention relates to a resin composition and a molded article molded therefrom.

### BACKGROUND

In recent years, biomass-containing resin compositions in which biomass-derived materials have been combined with thermoplastic resins derived from fossil resources such as petroleum have been investigated towards the establishment of a sustainable society. For example, a thermoplastic resin composition in which a biomass powder such as wood powder or bamboo powder is blended as a filler is proposed in Patent Document 1. Additionally, the replacement of calcium carbonate powder, which is blended as an inorganic filler material in thermoplastic resin compositions, with eggshell powder, mollusk shell powder, etc. has been investigated from the aspect of using waste materials. Such biomass-containing resin compositions have received interest as resin compositions having less impact on the environment because, by increasing the ratio of biomass-derived materials, they also reduce the ratio of thermoplastic resins derived from fossil resources.

Meanwhile, the resin products that are used in household appliances, the interior trim in automobiles, toys, etc. are generally molded by injection molding, etc. Polystyrene-based resins are commonly applied to the respective uses mentioned above as thermoplastic resins for injection molding, since they have excellent transparency and moldability, and are inexpensive. In polystyrene-based resin compositions that can be deployed in these various uses also, there has been a demand for replacement with biomass-derived materials and for reduction of the used amounts of polystyrene-based resins derived from fossil resources.

In response to this demand, the present inventors investigated the replacement of inorganic filler materials that are blended into polystyrene-based resin compositions with biomass-derived eggshell powder to form resin compositions with little environmental impact, and they found that, in eggshell powder-containing polystyrene-based resin compositions, the mechanical strength, such as the tensile modulus and the tensile elongation at break, tends to become lower, and it is difficult to obtain the desired physical properties. Additionally, while thermoplastic resins for injection molding are required to have a suitable level of flowability from the aspects of moldability and mold filling properties, said compositions tend to have low flowability and also tend to have poor moldability.

Patent Document 1: JP 2018-119048 A

### SUMMARY OF INVENTION

The present invention was made in consideration of the above-mentioned circumstances, and an objective thereof is to provide a resin composition containing eggshell powder and a molded article molded therefrom, wherein the resin composition has good properties in terms of tensile modulus and tensile elongation at break, and also has excellent moldability.

As a result of diligently investigating the above-mentioned problem, the present inventors discovered that a resin composition that has excellent properties in terms of tensile modulus and tensile elongation at break, and that also has good moldability can be obtained by blending a certain amount of an additive including specific compounds as main components with respect to the total amount of eggshell powder and polystyrene-based resin, thereby completing the present invention.
That is, the present invention includes the embodiments indicated below.
[1] A resin composition containing eggshell powder (A), a polystyrene-based resin (B), and an additive (C), wherein:
   a ratio of the eggshell powder (A) with respect to a total of 100 parts by mass of the eggshell powder (A) and the polystyrene-based resin (B) is 20 parts by mass or more; and
   the additive (C) includes at least one compound selected from among fatty acid amides (c1), fatty acid sodium salts (c2), and fatty acid esters (c3), the total content of the fatty acid amides (c1), the fatty acid sodium salts (c2), and the fatty acid esters (c3) with respect to the overall mass of the additive (C) is more than 50 mass%, and the content of the additive (C) with respect to a total of 100 parts by mass of the eggshell powder (A) and the polystyrene-based resin (B) is 10 parts by mass or less.
[2] The resin composition according to [1], wherein the ratio of the eggshell powder (A) with respect to a total of 100 parts by mass of the eggshell powder (A) and the polystyrene-based resin (B) is 70 parts by mass or less.
[3] The resin composition according to [1] or [2], wherein the resin composition has an MFR, under conditions with a load of 5 kg at 200 °C, of 4.0 g/10 min or higher.
[4] The resin composition according to [1] or [2], wherein the resin composition has an MFR, under conditions with a load of 10 kg at 220 °C, of 4.0 g/10 min or higher.
[5] The resin composition according to any one of [1] to [3], wherein the polystyrene-based resin (B) includes a styrene-butadiene copolymer resin (b3) and at least one resin selected from among general-purpose polystyrene resins (b1) and high impact polystyrene resins (b2).
[6] The resin composition according to [1,] [2,] [4,] or [5], wherein the polystyrene-based resin (B) includes an acrylonitrile-butadiene-styrene copolymer resin (b4).
[7] The resin composition according to any one of [1] to [6,] wherein an average particle diameter of the eggshell powder (A) is 3-50 µm.
[8] The resin composition according to any one of [1] to [7,] for injection molding.
[9] A molded article containing the resin composition according to any one of [1] to [8.]

According to the present invention, it is possible to provide a resin composition containing eggshell powder, wherein the resin composition has good properties in terms of tensile modulus and tensile elongation at break, and also has excellent moldability as well as a molded article thereof.

### DESCRIPTION OF EMBODIMENTS

Hereinafter, one embodiment of the present invention will be explained in detail. The present invention is not limited to the embodiment below and can be implemented by adding modifications, as appropriate, within a range not compromising the effects of the present invention. When a specific explanation regarding the one embodiment also applies to another embodiment, there are cases in which that explanation will be omitted regarding the other embodiment. The expression "X-Y" indicating numerical ranges in the present specification means "X or more and Y or less".

### [Resin composition]

The resin composition according to the present embodiment contains eggshell powder (A), a polystyrene-based resin (B), and an additive (C), and is characterized in that: a ratio of the eggshell powder (A) with respect to a total of 100 parts by mass of the eggshell powder (A) and the polystyrene-based resin (B) is 20 parts by mass or more; and the additive (C) includes at least one compound selected from among fatty acid amides (c1), fatty acid sodium salts (c2), and fatty acid esters (c3), the total content of the fatty acid amides (c1), the fatty acid sodium salts (c2), and the fatty acid esters (c3) with respect to the overall mass of the additive (C) is more than 50 mass%, and the content of the additive (C) with respect to a total of 100 parts by mass of the eggshell powder (A) and the polystyrene-based resin (B) is 10 parts by mass or less. The resin composition according to the present embodiment has good properties in terms of tensile modulus and tensile elongation at break, and also has excellent moldability. Additionally, it contains a certain amount of eggshell powder, which is a biomass-derived material, and therefore has less of an impact on the environment than conventional polystyrene-based resin compositions do.

### <Eggshell powder (A)>

The resin composition according to the present embodiment contains eggshell powder (A) (hereinafter also referred to as "component (A)"). The content of the eggshell powder (A) is 20 parts by mass or more with respect to a total of 100 parts by mass of the eggshell powder (A) and the polystyrene resin (B) (hereinafter also referred to as "component B"). In the present specification, the raw materials of the "eggshell powder (A)" are not particularly limited as long as they are eggshells that have been powdered. However, from the aspect of making effective use of waste materials, the shells of chicken eggs are preferably included as a raw material.

In one embodiment, the ratio of component (A) in the resin composition, with respect to a total of 100 parts by mass of component (A) and component (B), may be 30 parts by mass or more, may be 40 parts by mass or more, and may be 50 parts by mass or more. From the aspect of compounding the obtained resin composition, it should preferably be 70 parts by mass or less with respect to a total of 100 parts by mass of component (A) and component (B). That is, the ratio of component (A) with respect to a total of 100 parts by mass of component (A) and component (B) may be 20-70 parts by mass, may be 30-70 parts by mass, may be 40-70 parts by mass, and may be 50-70 parts by mass.
In one embodiment, the ratio of component (A) with respect to a total of 100 parts by mass of component (A) and component (B) may be 20-50 parts by mass, and may be 20-55 parts by mass.

In one embodiment, the average particle diameter of the eggshell powder (A) is preferably 3-50 µm, more preferably 3-40 µm, and even more preferably 4-30 µm. In one embodiment, the average particle diameter of the eggshell powder (A) may be 10-50 µm, may be 10-30 µm, and may be 3-15 µm. When a powder having a finer average particle diameter is used as the eggshell powder (A), the viscosity of the resin composition that is obtained tends to increase, and there are cases in which the flowability at the time of molding becomes lower. Additionally, the dispersibility of the eggshell powder (A) in the resin composition also tends to become lower. Conversely, if the average particle diameter is too large, it becomes difficult to obtain a molded article having the desired strength and flexibility. In particular, when an eggshell powder (A) having an average particle diameter larger than 50 µm is blended as the eggshell powder (A), the resin tends to break more easily, and there are cases in which a desired tensile elongation at break is difficult to obtain. The average particle diameter of the eggshell powder (A) can be measured with a particle diameter distribution measurement device in accordance with a "sifting method".

In one embodiment, the density (g/cm³) of the eggshell powder (A) is preferably 2.0-3.0 g/cm³, more preferably 2.0-2.8 g/cm³, and particularly preferably 2.3-2.7 g/cm³.

In one embodiment, the ratio of the eggshell powder (A) in the resin composition with respect to the total amount of the resin composition may be 10-70 mass%, and may be 30-60 mass%.

The eggshell powder (A) can be prepared by a conventionally known production method. For example, eggshells may be crushed by a known method, then classified to obtain an eggshell powder (A) having a desired average particle diameter. Specifically, after removing the eggshell membranes from the eggshells, the eggshells are dried. Then, the eggshells are crushed in a crushing machine, etc. to obtain an eggshell powder. Thereafter, the powder is classified by using a sieve having an appropriate mesh diameter to obtain the eggshell powder (A).

Additionally, a commercially available product can be used as the eggshell powder (A). Commercially available products include, for example, product name "GT-26", manufactured by Green Techno21, product name "Calhope^{®}" manufactured by Kewpie Egg Corp., etc.

In one embodiment, the resin composition may contain an inorganic filler material other than component (A). The inorganic filler material other than component (A) may, for example, be a mineral-derived inorganic filler material such as calcium carbonate, talc, and zeolite, or a biomineral-derived inorganic filler material other than eggshell powder. The expression "biomineral" refers to a mineral made by an organism, examples of which include pearls, mollusk shells, eggshells, bones, crustacean exoskeletons, etc. When using a combination of component (A) with the aforementioned inorganic filler material, the total amount of component (A) and the inorganic filler material should preferably be adjusted within a range not exceeding 70 parts by mass with respect to a total of 100 parts by mass of component (A) and component (B). The inorganic filler material may include only eggshell powder (A) from the aspect of making it easier to achieve good properties in terms of both moldability, and tensile modulus and tensile elongation at break.

### <Polystyrene-based resin (B)>

The resin composition according to the present embodiment includes a polystyrene-based resin (B). The ratio of the polystyrene-based resin (B) with respect to a total of 100 parts by mass of component (A) and component (B) is 80 parts by mass or less. In one embodiment, the ratio of component (B) may be 30-80 parts by mass, may be 60-80 parts by mass, and may be 50-80 parts by mass. From the aspect of obtaining a resin composition with less of component (B), the ratio of component (B) may be 30-50 parts by mass with respect to a total of 100 parts by mass of component (A) and component (B).

The "polystyrene-based resin (B)" in the present specification refers to a polymer including monomer units derived from an aromatic vinyl compound. The polystyrene-based resin (B) according to the present embodiment may include: a polymer of an aromatic vinyl compound; a copolymer of an aromatic vinyl compound and a compound copolymerizable with the aromatic vinyl compound; or a polymer obtained by polymerizing the above in the presence of a rubber polymer.

As aromatic vinyl compounds, there are, for example, styrene, α-methylstyrene, p-methylstyrene, o-methylstyrene, m-methylstyrene, ethylstyrene, p-t-butylstyrene, etc. These may be used as a single type alone, or as a combination of two or more types. Among these, styrene is preferably included.

As compounds that are copolymerizable with aromatic vinyl compounds, there are, for example: methacrylic acid esters such as methyl methacrylate and ethyl methacrylate; unsaturated nitrile compounds such as acrylonitrile and methacrylonitrile; and acid anhydrides such as maleic anhydride. These may be used as a single type alone, or as a combination of two or more types.

The percentage by mass of the copolymerizable compound with respect to the total amount (100 mass%) of the aromatic vinyl compound and the copolymerizable compound is preferably 20 mass% or less, and more preferably 15 mass% or less.

As rubber polymers, there are, for example, conjugated diene rubber, copolymers of conjugated dienes and aromatic vinyl compounds, ethylene-propylene copolymer-based rubbers, etc. More specifically, there are polybutadiene, styrene-butadiene random copolymers, styrene-butadiene block copolymers, polymers obtained by partially or fully hydrogenating the above, etc.

In one embodiment, the weight-average molecular weight (Mw) of the polystyrene-based resin (B) is preferably 10,000-500,000, and more preferably 100,000-300,000. If the Mw of the polystyrene-based resin (B) is within the aforementioned ranges, the flowability tends to be good. The Mw of the polystyrene-based resin (B) refers to the value computed by GPC (gel permeation chromatography), converted for polystyrene. In the case in which the polystyrene-based resin (B) is a mixture, the Mw refers to the value computed by measurement of the mixture by GPC.

In one embodiment, the polystyrene-based resin (B) preferably includes a styrene-butadiene copolymer resin (b3) and at least one resin selected from among general-purpose polystyrene resin (b1) and high impact polystyrene resin (b2). The general-purpose polystyrene resin (b1) may be combined with the styrene-butadiene copolymer resin (b3) from the aspect of making it easier to obtain a good balance of the tensile module and the tensile elongation at break. The high impact polystyrene resin (b2) may be combined with the styrene-butadiene copolymer resin (b3) from the aspect of obtaining a resin composition with superior properties in terms of tensile modulus.

In one embodiment, the polystyrene-based resin (B) may include a polymer including monomer units derived from the aromatic vinyl compound, monomer units derived from the unsaturated nitrile compound, and the aforementioned rubber polymer from the aspect of making it easier to obtain a resin composition with superior properties in terms of tensile modulus and impact strength (particularly impact strength). As such a polymer, a copolymer of acrylonitrile, styrene, and conjugated diene rubber is preferable, and an acrylonitrile-styrene-butadiene copolymer (b4) is more preferable.

### (General-purpose polystyrene resin (b1))

The general-purpose polystyrene resin (b1) (hereinafter sometimes referred to as "component (b1)") is a resin, also expressed as "GPPS", that is a styrene homopolymer. Due to component (B) including component (b1), the tensile modulus tends to be good. In one embodiment, the mass-average molecular weight (Mw) of component (b1) may be 10,000-500,000, and may be 100,000-300,000 from the aspect of flowability. The Mw of component (b1) refers to the value computed by GPC (gel permeation chromatography), converted for polystyrene.

When component (B) includes component (b1), the percentage of component (b1) in component (B) should preferably be 20-95 mass%, more preferably 30-80 mass% with respect to the overall mass of component (B) from the aspect of the tensile modulus. Additionally, the percentage of component (b1) in the resin composition with respect to the overall mass of the resin composition may be 10-80 mass%, and may be 10-60 mass%.

### (High impact polystyrene (b2))

The high impact polystyrene (b2) (hereinafter sometimes referred to as "component (b2)") is a resin, expressed as "HIPS", that is a graft polymer of styrene monomers graft-polymerized to a rubber polymer. Due to component (B) including component (b2), the impact strength (impact resistance) of the obtained molded article tends to increase. In one embodiment, the mass-average molecular weight (Mw) of component (b2) may be 100,000-250,000, and may be 130,000-200,000 from the aspect of flowability. The Mw of component (b2) refers to the value computed by GPC (gel permeation chromatography), converted for polystyrene. In one embodiment, the percentage of the rubber polymer (rubber component percentage) in component (b2) is preferably 1-15 mass%, more preferably 2-14 mass%, and more preferably 3-13 mass% with respect to the overall mass of component (b2). The percentage of the rubber polymer (rubber component percentage) in component (b2) with respect to the overall mass of component (b2) may be 1-10 mass%, 2-8 mass%, or 3-6 mass%. The percentage of the rubber component in component (b2) may be computed from the amount added when preparing component (b2), or may be measured by the same method as that of the "conjugated diene amount" mentioned below.

When component (B) includes component (b2), the percentage of component (b2) in component (B) should preferably be 10-90 mass%, more preferably 50-85 mass% with respect to the overall mass of component (B) from the aspect of flowability. Additionally, the percentage of component (b2) in the resin composition with respect to the overall mass of the resin composition may be 5-75 mass%, and may be 10-60 mass%.

### (Styrene-butadiene copolymer resin (b3))

The styrene-butadiene copolymer resin (b3) (hereinafter sometimes referred to as "component (b3)") is a copolymer resin obtained by polymerizing a monomer mixture including styrene and butadiene. As the component (b3), there are, for example, block copolymers of styrene-butadiene (SB), styrene-butadiene-butylene (SBB), styrene-butadiene-isoprene (SBI), styrene-butadiene-styrene (SBS), styrene-butadiene-butylene-styrene (SBBS), styrene-butadiene-isoprene-styrene (SBIS), etc., and block copolymers obtained by hydrogenating the above. These may be used as a single type alone, or as a combination of two or more types. Among these, the component (b3) preferably includes a styrene-butadiene (SB) copolymer from the aspect of that the brittleness due to highly filling a filler containing eggshell powder tends to be better improved.

In one embodiment, the mass-average molecular weight (Mw) of component (b3) is preferably 100,000-200,000, and more preferably 120,000-180,000. As long as the Mw of component (b3) is within the above-mentioned range, the compatibility with component (b1) and/or component (b2) tends to be good. The Mw of component (b3) refers to the value computed by GPC (gel permeation chromatography), converted for polystyrene.

In one embodiment, the percentage of component (b3) in component (B) should preferably be 5-80 mass%, more preferably 20-70 mass% with respect to the overall mass of component (B) from the aspect of improving brittleness. Additionally, the percentage of component (b3) in the resin composition with respect to the overall mass of the resin composition may be 5-30 mass%, and may be 10-25 mass%.

In one embodiment, the conjugated diene amount in component (b3) should preferably be 5-40 mass%, more preferably 6-30 mass%, and particularly preferably 8-28 mass% with respect to the overall mass of component (b3) from the aspect of making it easier to adjust the tensile modulus of the resin composition. The "conjugated diene amount" refers to the amount of butadiene included in component (b3). The conjugated diene amount may be a value computed from the amount of butadiene added when preparing component (b3), or may be a value measured by potentiometric titration using iodine monochloride, potassium iodide, and a sodium thiosulfate reference solution.

### (Acrylonitrile-butadiene-styrene copolymer (b4))

As the acrylonitrile-butadiene-styrene copolymer (b4), there are, for example: a mixture of polybutadiene with a copolymer of styrene and acrylonitrile; a graft polymer obtained by graft polymerization of styrene and acrylonitrile to polybutadiene; a mixture obtained by melt-mixing the copolymer with the graft polymer; a mixture obtained by melt-mixing the copolymer with a copolymer of butadiene and acrylonitrile; etc. However, there is no limitation to the above.

In one embodiment, the percentage of component (b4) in component (B) may be 30-100 mass%, may be 40-100 mass%, and may be 50-90 mass% with respect to the overall mass of component (B) from the aspect of improving brittleness. Additionally, the percentage of component (b4) in the resin composition with respect to the overall mass of the resin composition may be 30-80 mass%, and may be 40-80 mass%.

In one embodiment, the conjugated diene amount in component (b4) should preferably be 5-40 mass%, more preferably 7-30 mass%, and particularly preferably 10-25 mass% with respect to the overall mass of component (b4) from the aspect of making it easier to adjust the tensile modulus of the resin composition. The "conjugated diene amount" refers to the amount of butadiene included in component (b4), and as with component (b3), may be a value computed from the amount of butadiene added, or may be a value measured by potentiometric titration using iodine monochloride, potassium iodide, and a sodium thiosulfate reference solution.

In one embodiment, when component (B) includes component (b3) and at least one resin selected from component (b1) and component (b2), the total amount of component (b1), component (b2), and component (b3) in component (B) may be 50-100 mass%, and may be 60-100 mass% with respect to the overall mass of component (B). As long as the total amount of component (b1) to component (b3) in component (B) is within the above-mentioned range, a resin composition that has good properties in terms of tensile modulus and flowability tends to be obtained.

Component (B) may include components (other components) aside from component (b1) to component (b4). As such other components, there are, for example, styrene-based thermoplastic elastomers (for example, copolymers of styrene-isoprene (SI), styrene-isoprene-styrene (SIS), etc., and copolymers obtained by hydrogenating the above, etc.) other than component (b3) and component (b4). These may be used as a single type alone, or as a combination of two or more types. When component (B) contains other components, the amount thereof should preferably be 30 mass% or less with respect to the overall mass of component (B).

### <Additive (C)>

The resin composition according to the present embodiment contains an additive (C). The additive (C) includes at least one compound selected from among fatty acid amides (c1), fatty acid sodium salts (c2), and fatty acid esters (c3), and the total content of the compounds (c1), (c2), and (c3) with respect to the overall mass of the additive (C) is more than 50 mass%. In the present embodiment, the additive (C) includes the aforementioned compounds as the main components.

The content of the additive (C) in the resin composition according to the present embodiment, with respect to a total of 100 parts by mass of component (A) and component (B), is 10 parts by mass or less. By combining such an additive (C) with components (A) and (B), a resin composition with good properties in terms of tensile modulus and tensile elongation at break, and also with excellent moldability, is obtained.

In one embodiment, the content of the additive (C) with respect to a total of 100 parts by mass of component (A) and component (B) may be 9 parts by mass or less, may be 8 parts by mass or less, and may be 7 parts by mass or less. The lower limit of the content of the additive (C) is not particularly limited as long as the effects of the present invention are obtained, and the lower limit may be 0.5 parts by mass or more, and may be 1 part by mass or more. That is, the content of the additive (C) with respect to a total of 100 parts by mass of component (A) and component (B) may be 0.5-10 parts by mass, may be 0.5-9 parts by mass, may be 0.5-8 parts by mass, may be 1-8 parts by mass, and may be 1-6 parts by mass.

### (Fatty acid amide (c1)]

In the present embodiment, the additive (C) may include a fatty acid amide (c1) (hereinafter sometimes referred to as "compound (c1)"). Fatty acid amides (c1) are compounds having an amide group represented by "R₁-C(=O)-N-" in the structure thereof. The "fatty acid amides" include primary amides, secondary amides, tertiary amides, and those having two or more nitrogen atoms in each molecule. However, the fatty acid amides (c1) in the present embodiment do not include polymers such as fatty acid polyamides, as represented by nylon-6.

The R₁ is a hydrocarbon group, which may have a substituent group. The expression "may have a substituent group" means that one or more hydrogen atoms in a hydrocarbon group may be substituted with a substituent group. R₁ is preferably an alkyl group, which may have a substituent group, or an alkenyl group, which may have a substituent group, having two or more carbon atoms. Although the fatty acid amide (c1) is not particularly limited as long as the effects of the present invention are obtained, from the aspect of compatibility with component (B), it is preferably a higher fatty acid amide in which R₁ is an alkyl group, which may have a substituent group, or an alkenyl group, which may have a substituent group, having ten or more carbon atoms. Specifically, there are saturated fatty acid monoamides such as lauramide, palmitamide, stearamide, and behenamide; unsaturated fatty acid monoamides such as oleamide and erucamide; substituted amides such as N-stearylstearamide, N-stearyloleamide, N-oleylstearamide, and N-stearylerucamide; saturated fatty acid bis-amides such as methylene bis-stearamide, ethylene bis-capramide, ethylene bis-lauramide, ethylene bis-stearamide, ethylene bis-behenamide, hexamethylene bis-stearamide, hexamethylene bis-behenamide, and N,N'-distearyladipamide; and unsaturated fatty acid bis-amides such as ethylene bis-oleamide, ethylene bis-erucamide, hexamethylene bis-oleamide, and N,N'-dioleyladipamide; etc. These may be used as a single type alone or as a combination of two or more types. Among these, compound (c1) preferably includes a saturated fatty acid bis-amide having ten or more carbon atoms from the aspect that the extrusion with a resin becomes better and the moldability tends to improve.

### (Fatty acid sodium salt (c2))

In the present embodiment, the additive (C) may include a fatty acid sodium salt (c2). Fatty acid sodium salts (c2) (hereinafter sometimes referred to as "compound (c2)") are compounds represented by "R₂-C(=O)-O-Na", where examples of R₂ are the same as those for R₁, and R₂ is preferably an alkyl group, which may have a substituent group, or an alkenyl group, which may have a substituent group, having two or more carbon atoms. The fatty acid sodium salt (c2) is not particularly limited as long as the effects of the present invention are obtained. In one embodiment, from the aspects of tending to have better compatibility with component (B) and of tending to obtain a resin composition with superior tensile elongation at break, it is preferably a sodium salt of a higher fatty acid in which R₂ is an alkyl group, which may have a substituent group, or an alkenyl group, which may have a substituent group, having ten or more carbon atoms. Specifically, there are sodium salts of higher fatty acids having ten to twenty carbon atoms, such as sodium laurate, sodium myristate, sodium palmitate, sodium oleate, and sodium stearate. These may be used as a single type alone or as a combination of two or more types. That is, the fatty acid sodium salt (c2) may be a mixture of the aforementioned higher fatty acid sodium salts having ten to twenty carbon atoms.

### (Fatty acid ester (c3))

In the present embodiment, the additive (C) may include a fatty acid ester (c3). Fatty acid esters (c3) (hereinafter sometimes referred to as "compound (c3)") are esters including a fatty acid group represented by "R₃-C(=O)O-" in the structure thereof. In one embodiment, the fatty acid ester (c3) is preferably a higher fatty acid ester obtained by a reaction between a higher fatty acid having ten or more carbon atoms and a polyhydric alcohol. The higher fatty acid is preferably an alkyl group or an alkenyl group having ten or more carbon atoms, which may have a substituent group. Additionally, as polyhydric alcohols, there are dihydric to hexahydric polyhydric alcohols such as ethylene glycol, glycerin, 1,2,4-butanediol, diglycerin, pentaerythritol, sorbitol, erythritol, and hexanediol.

In a preferable embodiment, the higher fatty acid ester may include a glycerin fatty acid ester. As glycerin fatty acid esters, there are, for example, lauric acid monoglyceride, lauric acid diglyceride, lauric acid triglyceride, palmitic acid monoglyceride, palmitic acid diglyceride, palmitic acid triglyceride, stearic acid monoglyceride, stearic acid diglyceride, stearic acid triglyceride, stearic acid tetraglyceride, hydroxystearic acid monoglyceride, hydroxystearic acid diglyceride, hydroxystearic acid triglyceride, hydroxystearic acid tetraglyceride, etc. These may be used as a single type alone or as a combination of two or more types. Among these, hydroxystearic acid glyceride is preferably included from the aspect that the compatibility between the eggshell powder and the resin component tends to improve and a resin composition with superior tensile elongation at break tends to be obtained.

In one embodiment, the additive (C) preferably includes a fatty acid sodium salt (c2) from the aspect that better tensile elongation at break tends to be obtained.

In the resin composition according to the present embodiment, the total content of the compounds (c1) to (c3) in the additive (C) with respect to the overall mass of the additive (C) is more than 50 mass%, may be more than 50 mass% and 100 mass% or less, may be 55-100 mass%, may be 60-100 mass%, and may be 65-100 mass%.

In one embodiment, the additive (C) may include another additive other than the aforementioned compounds (c1) to (c3). As such other additives, there are, for example, ultraviolet absorbers, photostabilizers, antioxidants, lubricants, plasticizers, colorants, antistatic agents, flame retardants, mold release agents, and mineral oils; reinforcing fibers such as glass fibers, carbon fibers, and aramid fibers; etc. These may be used as a single type alone or as a combination of two or more types.

### (Plasticizers)

In one embodiment, the additive (C) may further include a plasticizer. By combining at least one compound selected from among compounds (c1), (c2), and (c3) with a plasticizer, a resin composition that has a low coefficient of static friction while maintaining the moldability and the mechanical properties such as tensile modulus and tensile elongation at break within good ranges tends to be obtained. Such a resin composition tends to also have good wear resistance. In this case, "wear resistance" may be the property, in a molded article having mated portions, in which wear does not tend to occur when mated repeatedly.

As plasticizers, there are, for example, processed oils such as those that are paraffin based or naphthene based, liquid paraffin and other paraffins, waxes, synthetic polymer-based plasticizers such as silicone oils and silicone-based rubbers, ester-based plasticizers such as those that are phthalic acid based, adipic acid based, sebacic acid based, or phosphoric acid based, etc. Among these, it is preferable to include at least one plasticizer selected from among synthetic polymer-based plasticizers, particularly silicone oils and silicone-based rubbers.

### (i) Silicone oil

The silicone oil is not particularly limited, and a known type may be used. In one embodiment, as silicone oils, there are, for example, dimethylpolysiloxane, methylphenylsiloxane, methylhydrogen polysiloxane, and modifications, etc. thereof. These may be used as a single type alone or as a combination of two or more types. Among these, it is preferable to include dimethylpolysiloxane from the aspect that a resin composition with superior wear resistance tends to be obtained. In a preferable embodiment, as the diemthylsiloxane, one having a kinematic viscosity at 25 °C of 100-500 mm²/s may be employed. The kinematic viscosity may, for example, be measured at a test temperature of 37.8 °C or 40 °C using a Cannon-Fenske viscometer in accordance with "5. Kinematic viscosity testing methods" in JIS K 2283:2000.

### (ii) Silicone-based rubber

Silicone-based rubbers are rubbers containing a polyorganosiloxane rubber. As silicone-based rubbers, there are no particular limitations, and for example, a polyorganosiloxane rubber or a silicone/acrylic composite rubber in which polyorganosiloxane and polyalkyl (meth)acrylate rubber are composited may be used. The expression "silicone/acrylic composite rubber" refers to a composite rubber that is obtained by polymerization by adding various type of monomers in stages while polymerizing two or more types of monomers constituting the rubber. Among these, silicone/acrylic composite rubber may be included from the aspect that a resin composition having superior wear resistance tends to be obtained.

In the case in which the additive (C) includes a plasticizer, the content of the plasticizer in the additive (C) may be appropriately adjusted within the range of 50 mass% or less with respect to the overall mass of the additive (C). In one embodiment, the content of the plasticizer in the additive (C) with respect to a total of 100 parts by mass of component (A) and component (B) may be 0.3-3.0 parts by mass, may be 0.3-2.5 parts by mass, may be 0.3-2.0 parts by mass, and may be 0.3-1.5 parts by mass. If the plasticizer content is within the aforementioned ranges, the plasticizer does not tend to bleed out, and the wear resistance also tends to be good.

The additive (C) may include other components other than the aforementioned plasticizer, and for example, may further include an ultraviolet absorber, a photostabilizer, an antioxidant, a lubricant, etc.

As ultraviolet absorbers, there are, for example, benzotriazole-based ultraviolet absorbers such as 2-(5'-methyl-2'-hydroxyphenyl)benzotriazole, 2-(5'-t-butyl-2'-hydroxyphenyl)benzotriazole, 2-[2'-hydroxy-3',5'-bis(α,α-dimethylbenzyl)phenyl]benzotriazole, 2-(3',5'-di-t-butyl-2'-hydroxyphenyl)benzotriazole, 2-(3'-t-butyl-5'-methyl-2'-hydroxyphenyl)-5-chlorobenzotriazole, 2-(3',5'-di-t-butyl-2'-hydroxyphenyl)-5-chlorobenzotriazole, 2-(3',5'-di-t-amyl-2'-hydroxyphenyl)benzotriazole, 2-[3'-(3",4",5",6"-tetrahydrophthalimidomethyl)-5'-methyl-2'-hydroxyphenyl]benzotriazole, and 2,2'-methylenebis[4-(1,1,3,3-tetramethylbutyl)-6-(2H-benzotriazole-2-yl)phenol]; oxalic acid anilide-based ultraviolet absorbers such as 2-ethoxy-2'-ethyl oxalic acid bis-anilide, 2-ethoxy-5-t-butyl-2'-ethyl oxalic acid bis-anilide, and 2-ethoxy-4'-isodecylphenyl oxalic acid bis-anilide; benzophenone-based ultraviolet absorbers such as 2-hydroxy-4-n-octoxybenzophenone, 2,4-dihydroxybenzophenone, 2-hydroxy-4-methoxybenophenone, 2-hydroxy-4-methoxy-5-sulfobenzophenone, 2,2'-dihydroxy-4-methoxybenzophenone, 2,2'-dihydroxy-4,4'-dimethoxybenzophenone, and 2-hydroxy-4-methoxy-2'-carboxybenzophenone; salicylic acid-based ultraviolet absorbers such as phenyl salicylate, p-t-butylphenyl salicylate, and p-octylphenyl salicylate; cyanoacrylate-based ultraviolet absorbers such as 2-ethylhexyl-2-cyano-3,3'-diphenyl acrylate and ethyl-2-cyano-3,3'-diphenyl acrylate; and titanium oxide-based ultraviolet stabilizers such as rutile-type titanium oxide, anatase-type titanium oxide, alumina, silica, and titanium oxide treated with a surface treatment agent such as a silane coupling agent or a titanium-based coupling agent. These may be used as a single type alone or as a combination of two or more types.

As photostabilizers, there are, for example, bis(2,2,6,6-tetramethyl-4-piperidyl)sebacate, bis(1,2,2,6,6-pentamethyl-4-piperidyl)sebacate, dimethyl succinate/1-(2-hydroxyethyl)-4-hydroxy-2,2,6,6-tetramethylpiperidine polycondensate, poly[[6,(1,1,3,3-tetramethylbutyl)amino-1,3,5-triazine-2,4-diyl] [(2,2,6,6-tetramethyl-4-piperidyl)imino]-hexamethylene-[(2,2,6,6-tetramethyl-4-piperidyl)imino]], and 1-[2-[3-(3, 5-di-t-butyl-4-hydroxyphenyl)propionyloxy]ethyl]-4-[3-(3,5-di-t-butyl-4-hydroxyphenyl)propionyloxy]-2,2,6,6-tetramethylpiperidine. These may be used as a single type alone or as a combination of two or more types.

As antioxidants, there are, for example, phenol-based antioxidants such as triethyleneglycol-bis[3-(3-t-butyl-5-methyl-4-hydroxyphenyl)propionate], 2,4-bis(n-octylthio)-6-(4-hydroxy-3,5-di-t-butylanilino)-1,3,5-triazine, pentaerythrityltetracis[3-(3,5-di-t-butyl-4-hydroxyphenyl)propionate], octadecyl-3-(3,5-di-t-butyl-4-hydroxyphenyl)propionate, 2,2-thiobis(4-methyl-6-t-butylphenol), and 1,3,5-trimethyl-2,4,6-tris(3,5-di-t-butyl-4-hydroxybenzyl)benzene; sulfur-based antioxidants such as ditridecyl-3,3'-thiodipropionate, dilauryl-3,3'-thiodipropionate, ditetradecyl-3,3'-thiodipropionate, distearyl-3,3'-thiodipropionate, and dioctyl-3,3'-thiodipropionate; and phosphorus-based antioxidants such as trisnonylphenyl phosphite, 4,4'-butylidene-bis(3-methyl-6-t-butylphenyl-di-tridecyl)phosphite, (tridecyl)pentaerythritol diphosphite, bis(octadecyl)pentaerythritol diphosphite, bis(di-t-butylphenyl)pentaerythritol diphosphite, bis(di-t-butyl-4-methylphenyl)pentaerythritol diphosphite, dinonylphenyloctyl phosphonite, tetracis(2,4-di-t-butylphenyl) 1,4-phenylene-di-phosphonite, tetracis(2,4-di-t-butylphenyl) 4,4'-biphenylene-di-phosphonite, and 10-decyloxy-9,10-dihydro-9-oxa-10-phosphaphenanthrene. These may be used as a single type alone or as a combination of two or more types.

The percentage of the other additives aside from the aforementioned plasticizer in the additive (C) may be adjusted, as appropriate, within the range of 50 mass% or less with respect to the overall mass of the additive (C). In one embodiment, it is preferably 40 mass% or less, more preferably 30 mass% or less with respect to the overall mass of the additive (C). In the resin composition according to the present embodiment, which contains a certain amount of eggshell powder, only compounds (c1) to (c3) may be included as the additive (C) from the aspect of maintaining the physical properties such as tensile elongation at break within a good range.

### <Other thermoplastic resins>

Although the resin composition according to the present embodiment may include a thermoplastic resin (other thermoplastic resin) aside from the polystyrene-based resin (B), the resin composition preferably does not contain another thermoplastic resin from the aspect of obtaining a resin composition with a low resin content.

### <Properties of resin composition>

In one embodiment, the MFR of the resin composition, under conditions with a load of 5 kg at 200 °C, is preferably 4.0 g/10 min or higher. If the MFR (200°C, 5 kg load) of the resin composition is 4.0 g/10 min or higher, the moldability tends to be better. The MFR (200 °C, 5 kg load) of the resin composition may be 4.5 g/10 min or higher, may be 5.0 g/10 min or higher, may be 6.0 g/10 min or higher, and may be 10.0 g/10 min or higher. The MFR of the resin composition may be measured in accordance with the specifications of JIS K 7210-2:2014 (ISO 133-2:2011). A resin composition with an MFR (200 °C, 5 kg load) of 4.0 g/10 min or higher tends to be obtained when component (B) includes component (b3) and at least one resin selected from component (b1) and component (b2).

In one embodiment, the MFR of the resin composition, under conditions with a load of 10 kg at 220 °C, may be 4.0 g/10 min or higher, may be 4.5 g/10 min or higher, may be 5.0 g/10 min or higher, may be 6.0 g/10 min or higher, and may be 10.0 g/10 min or higher. The MFR (220 °C, 10 kg load) of the resin composition may also be measured in accordance with the specifications of JIS K 7210-2:2014 (ISO 133-2:2011). A resin composition with an MFR (220 °C, 10 kg load) of 4.0 g/10 min or higher tends to be obtained when component (B) includes component (b4).

In one embodiment, the tensile modulus of the resin composition measured in accordance with ASTM-D638 may be 1,000 MPa or higher, may be 1,200 MPa or higher, and may be 1.500 MPa or higher. The upper limit of the tensile modulus is preferably lower than 1,800 MPa. That is, the tensile modulus of the resin composition should preferably be 1,000 MPa or higher and lower than 1,800 MPa. Additionally, the tensile elongation at break of the resin composition, measured in accordance with ASTM-D638, may be 15% or higher, may be 20% or higher, and may be 50% or higher. The resin composition according to the present embodiment includes at least a certain amount of eggshell powder (A), and has good properties in terms of tensile modulus and tensile elongation at break. Additionally, the moldability is also good.

With a resin composition containing eggshell powder, the mechanical strength, such as the tensile modulus and the tensile elongation at break, tends to become lower. Upon investigating the reason for this, the present inventors discovered that eggshell powder has low adhesion with resin components and that this makes it difficult to obtain the desired tensile properties. As a result of further diligent investigation, the present inventors discovered that, by blending a certain amount of an additive (C) including the specific compounds (c1) to (c3) as main components, surprisingly, the adhesion between the eggshell powder and the resin components tends to increase, and as a result thereof, the tensile elongation at break of the obtained resin composition improves.

### [Resin composition production method]

The resin composition according to the present embodiment can be produced by using an eggshell powder (A), a polystyrene-based resin (B), an additive (C), and other components as needed, and can be produced, for example, by melt-kneading these components. Specifically, a pellet-shaped resin composition can be prepared by feeding each of components (A) to (C) to a twin-screw extruder, melt-kneading the components at a temperature of 200-250 °C, then extruding the mixture in the form of strands.

### [Use]

As mentioned above, the resin composition according to the present embodiment has good properties in terms of tensile modulus and tensile elongation at break, and also has excellent moldability. Thus, it can be favorably used as a resin composition for injection molding. Of course, the uses of the resin composition according to the present embodiment are not limited to use for injection molding.

### [Molded article]

The molded article according to the present embodiment includes the aforementioned resin composition. Preferably, it is obtained by injection molding the resin composition according to the present embodiment. The molded article according to the present embodiment has excellent properties in terms of tensile modulus and tensile elongation at break. Additionally, the molded article according to the present embodiment includes a certain amount of eggshell powder, and therefore is a molded article with little environmental impact. The molded article according to the present embodiment can be applied to uses such as stationery, furniture, construction materials, tableware, containers, gardening materials, and toys.

### EXAMPLES

Hereinafter, the present invention will be explained in detail with reference to examples. However, the present invention is not limited by the descriptions below.

### [Preparation of eggshell powder (A-1)]

Chicken eggshells were washed with water, then loaded in a hot-air dryer and dried. After being dried, the eggshells were loaded in a stirring separation tank and stirred while applying high-pressure water to separate and remove the egg membranes on the inner sides of the eggshells. Thereafter, the eggshells with the egg membranes separated and removed were re-loaded in the hot-air dryer and dried for six hours at 90-120 °C. The dried eggshells were crushed by using a crushing machine to obtain an eggshell powder (A-1). Upon measuring the density of the obtained eggshell powder (A-1) by using a pycnometer (product name "Dry Automatic Pycnometer AccuPyc II 1340", manufactured by Shimadzu Corp.), the density was 2.6 g/cm³. The obtained powder was further classified to obtain an eggshell powder (A-1) with an average particle diameter of 10 µm.

### [Production of polystyrene-based resin (B)]

### <Production of general-purpose polystyrene resin (b1-1)>

In a polymerization tank having an internal capacity of 200 L, 70.4 kg of purified water and 300 g of calcium triphosphate were added and stirred. Then, 80.0 kg of styrene and 267.2 g of benzoyl peroxide were added, the tank was sealed, and the contents were allowed to react at 100 °C for six hours. After the reaction ended, the reaction product was cooled, neutralized, dewatered, and dried to obtain a polystyrene homopolymer (GPPS) (b1-1). The Mw of the obtained component (b1-1), when measured under the following conditions using a GPC, was 167,000.

### <GPC measurement conditions>

Device: Product name "Shodex SYSTEM-21", manufactured by Shodex Co., Ltd.
Column: PLgel MIXED-B
Measurement temperature: 40 °C
Solvent: Tetrahydrofuran
Flow rate: 1.0 mL/min
Detection method: RI
Sample concentration: 0.2 mass%
Injection amount: 100 µL
Calibration line: Standard polystyrene (manufactured by Polymer Laboratories)

### <Production of high-impact polystyrene resin (b2-1)>

A polymer raw material was obtained, using a low-cis polybutadiene rubber (product name "Diene 55AS", manufactured by Asahi Kasei Corp.) as a rubber polymer, by dissolving this rubber polymer (5.3 mass% with respect to the overall mass of the polymer raw material) and styrene in ethylbenzene (5 mass% with respect to the overall mass of the polymer raw material) serving as a solvent. Additionally, 0.1 parts by mass of an antioxidant (product name "Irganox^{®} 1076", manufactured by Ciba-Geigy Japan Ltd.) for the rubber polymer were added. This polymer raw material was supplied at a rate of 12.5 kg/hr to a 14 L jacket-equipped reactor (R-01) provided with anchor-shaped stirring blades having a blade diameter of 0.285 m. The raw material was polymerized at a reaction temperature of 140 °C and a rotation speed of 2.17 sec⁻¹ to obtain a polymer solution. The polymer percentage of the obtained polymer solution was 25%. This polymer solution was fed to two serially arranged jacket-equipped plug flow-type reactors with internal capacities of 21 L. In the first plug flow-type reactor (R-02), the jacket temperature was adjusted so that the reaction temperature became 120-140 °C in the flow direction of the polymer solution. In the second plug flow-type reactor (R-03), the jacket temperature was adjusted so that the reaction temperature had a gradient of 130-160 °C in the flow direction of the polymer solution. The polymer percentage at the R-02 outlet was 50% and the polymer percentage at the R-03 outlet was 70%. In this case, the polymer percentage is a value computed by Expression (1) below. Polymer percentage (%) = [(amount of polymer produced)/{(amount of monomer added) + (amount of solvent)}] × 100

The obtained polymer solution was heated to 230 °C, then supplied to a degassing tank with a vacuum level of 5 torr, and the unreacted monomers and the solvent were separated and recovered. Then, the reaction product was removed from the degassing tank with a gear pump, passed through a die plate to form strands, then passed through a water tank and pelletized to obtain high-impact polystyrene (b2-1). The rubber component content in the obtained component (b2-1) was 4.8 mass%. Additionally, the Mw of component (b2-1), measured under the same conditions as component (b1-1), was 210,000.

### <Production of styrene-butadiene copolymer resin (b3-1)>

As component (b3-1), a styrene-butadiene block copolymer resin was prepared. First, a reaction vessel was loaded with 500.0 kg of cyclohexane and 75.0 g of tetrahydrofuran (THF), 1,000 mL of a 10 mass% cyclohexane solution of n-butyl lithium was added as a polymerization initiator solution, and the reaction vessel was held at 30 °C. Then, 20.0 kg of styrene was added and the styrene was allowed to undergo anionic polymerization. At that time, the internal temperature rose to 35 °C. After the styrene was completely consumed, 56 kg of 1,3-butadiene and 64 kg of styrene were simultaneously added, and after the styrene and the 1,3-butadiene were completely consumed, the internal temperature of the reaction system was lowered to 75 °C, and 60.0 kg of styrene were further added in a single batch to complete the polymerization. Finally, all of the polymerization-active terminals were deactivated with water to obtain a polymer solution containing a styrene-butadiene copolymer having polystyrene blocks and tapered blocks of styrene and butadiene. This polymer solution was degassed, and an extruder was used to obtain a pellet-shaped block copolymer (b3-1). The conjugated diene content of the obtained component (b3-1), computed from the amount of monomer that was added, was 28 mass%.

### <Acrylonitrile-butadiene-styrene copolymer resin (b4-1)>

As component (b4-1), the following was used.

Component (b4-1): Acrylonitrile-butadiene-styrene copolymer resin (product name "Denka ABS GR-3000", manufactured by Denka Co., Ltd.)

### [Additive (C)]

As the additive (C), the following were used.

Compound (c1): Ethylene bis-stearamide (product name "Kao Wax EB-FF", manufactured by Kao Corp.).

Compound (c2): Product name "Tankaru MH", manufactured by Miyoshi Oil & Fat Co., Ltd. (a mixture of fatty acid sodium salts with a mass ratio wherein lauric acid:myristic acid:palmitic acid:stearic acid:oleic acid = 3:2:40:15:30). Compound (c3): 1,2-hydroxystearic acid triglyceride (product name "OHG", manufactured by Dainichi Chemical Industry Co., Ltd.).

### <Other additives>

Plasticizer 1: Silicone oil (dimethylpolysiloxane, product name "KF-96 350CS", manufactured by Shin-Etsu Chemical Co., Ltd., kinematic viscosity (25 °C): 350 mm²/s)
Plasticizer 2: Silicone/acrylic composite rubber (product name "Metablen^{®} SX-005", manufactured by Mitsubishi Chemical Corp.)
Zinc stearate: Product name "Zn-St", manufactured by Nitto Kasei Co., Ltd. Polyethylene wax: Product name "Excerex^{®} T", manufactured by Mitsui Chemicals, Inc.
Stearic acid: Product name "Stearic Acid Cherry", manufactured by NOF Corp.

### [Example 1]

As the polystyrene-based resin (B), 30 parts by mass of component (b1-1) and 20 parts by mass of component (b2-1) were blended with 50 parts by mass of eggshell powder (A-1) (average particle diameter 10 µm). After blending 1 part by mass of compound (c1) into a total of 100 parts by mass of component (A) and component (B), a twin-screw extruder (product name "TEM35-B", manufactured by Toshiba Machine Co., Ltd.) was used to melt-knead the mixture at 200 °C and at 350 rpm, then to extrude the mixture in the form of strands at a discharge rate of 20 kg/hr to obtain a pellet-shaped resin composition. Upon measuring the MFR of the obtained pellets under the conditions indicated below, the MFR was 6.7 g/10 min. Additionally, the obtained pellets were molded in the form of sheets with a thickness of 0.40 mm by using a hot press (product name "SA-303", manufactured by Tester Sangyo Co., Ltd.), and the tensile modulus, the tensile elongation at break, and the impact strength were evaluated by the methods indicated below. The results are shown in Table 1.

### <MFR and moldability evaluation>

The resin compositions were measured in accordance with the JIS K 7210-2:2014 (ISO 13302:2011) specifications under conditions with a 5 kg load at 200 °C or with a 10 kg at 220 °C. Additionally, the moldability was evaluated in accordance with the evaluation criteria below, and the effects of the present invention were considered to be expressed if the evaluation was good or better.

### (Evaluation criteria)

Excellent: MFR (200 °C, 5 kg load) or MFR (220 °C, 10 kg load) was 10.0 g/10 min or higher.

Good: MFR (200 °C, 5 kg load) or MFR (220 °C, 10 kg load) was 4.0 g/10 min or higher, and lower than 10.0 g/10 min.

Fail: MFR (200 °C, 5 kg load) or MFR (220 °C, 10 kg load) was lower than 4.0 g/10 min.

### <Tensile modulus measurement method>

An autograph (product name "AGS-X", manufactured by Shimadzu Corp.) was used to measure the tensile modulus in accordance with ASTM-D638. Specifically, sheet-shaped samples with a thickness of 0.40 mm were cut into the shape of dumbbell no. 1 to prepare measurement samples, and the tensile moduli were measured, under conditions with a measurement temperature of 23 °C and a humidity of 50%, at a pulling rate of 5 mm/min. Evaluations were made in accordance with the evaluation criteria below, and the effects of the present invention were considered to be expressed if the evaluation was good or better.

### (Evaluation criteria)

Excellent: Tensile modulus of 1,200 MPa or higher and lower than 1,800 MPa.

Good: Tensile modulus of 800 MPa or higher and lower than 1,200 MPa.

Fail: Tensile modulus of lower than 800 MPa or of 1,800 MPa or higher.

### <Tensile elongation at break measurement method>

An autograph (product name "AGS-X", manufactured by Shimadzu Corp.) was used to measure the tensile elongation at break in accordance with ASTM-D638. Specifically, sheet-shaped samples with a thickness of 0.40 mm were cut into the shape of dumbbell no. 1 to prepare measurement samples, and the tensile elongations at break were measured, under conditions with a measurement temperature of 23 °C and a humidity of 50%, at a pulling rate of 5 mm/min. Evaluations were made in accordance with the evaluation criteria below, and the effects of the present invention were considered to be expressed if the evaluation was passing or better.

### (Evaluation criteria)

Excellent: Tensile elongation at break of 40% or higher.

Good: Tensile elongation at break of 25% or higher and lower than 40%.

Pass: Tensile elongation at break of 15% or higher and lower than 25%.

Fail: Tensile elongation at break lower than 15%.

### <Impact strength>

A film impact tester (manufactured by Yasuda Seiki Seisakusho, Ltd.) was used to measure the impact strength in accordance with ASTM-D3420. Specifically, sheet-shaped samples with a thickness of 0.40 mm were cut to obtain 70 mm × 70 mm measurement samples. Additionally, evaluations were made in accordance with the evaluation criteria below.

### (Evaluation criteria)

Excellent: Impact strength of 2.0 J/mm or higher.
Good: Impact strength of 1.5 J/mm or higher and lower than 2.0 J/mm.
Fail: Impact strength lower than 1.5 J/mm.

### [Examples 2-20 and Comparative Examples 1-7]

Aside from setting the compositions of the resin compositions to be as indicated in Tables 1 and 2, resin compositions were prepared by using methods similar to that of Example 1. Additionally, pellets were made by using methods similar to that of Example 1 and the MFRs were measured. Furthermore, the resin compositions were molded in the form of sheets by methods similar to that of Example 1 and the tensile moduli, the tensile elongations at break, and the impact strengths were measured. The results are shown in Tables 1 and 2.

**[Table 1]**

| | | | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 |
|---|---|---|---|---|---|---|---|---|---|---|---|---|---|---|---|---|---|
| Resin Composition | Eggshell powder (A) | Component (A-1) | (parts by mass) | 50 | 50 | 50 | 50 | 50 | 50 | 50 | 50 | 50 | 50 | 50 | 50 | 50 | 30 |
| | Polystyrene-based resin (B) | Component (b1-1) | (parts by mass) | 30 | 30 | 30 | 30 | 30 | 30 | 30 | 30 | 30 | 30 | 30 | 30 | 30 | 56 |
| | | Component (b2-1) | (parts by mass) | | | | | | | | | | | | | | |
| | | Component (b3-1) | (parts by mass) | 20 | 20 | 20 | 20 | 20 | 20 | 20 | 20 | 20 | 20 | 20 | 20 | 20 | 14 |
| | Additive (C) | Compound (c1) | (parts by mass) | 1 | | | 1 | 1 | | 2 | 2 | | 2 | 2 | 2 | 3 | 1 |
| | | Compound (c2) | (parts by mass) | | 1 | | 1 | | 1 | 2 | | 2 | | | | 3 | 2 |
| | | Compound (c3) | (parts by mass) | | | 1 | | 1 | 1 | | 2 | 2 | | | | | |
| | | Zinc stearate | (parts by mass) | | | | | | | | | | 1 | | | | |
| | | Polyethylene wax | (parts by mass) | | | | | | | | | | | 1 | | | |
| | | Stearic acid | (parts by mass) | | | | | | | | | | | | 1 | | |
| | Percentage of total amount of compounds (c1) to (c3) in additive (C) | | (mass%) | 100 | 100 | 100 | 100 | 100 | 100 | 100 | 100 | 100 | 66.7 | 66.7 | 66.7 | 100 | 100 |
| Evaluation Results | Mechanical properties | Tensile modulus | (MPa) | 1192 | 1130 | 1155 | 1115 | 1140 | 1078 | 1022 | 1072 | 947 | 1216 | 1192 | 1328 | 929 | 1097 |
| | | Evaluation results | (-) | good | good | good | good | good | good | good | good | good | exc. | good | exc. | good | good |
| | | Tensile elongation at break | (%) | 30 | 42 | 38 | 45 | 42 | 64 | 72 | 68 | 80 | 30 | 18 | 20 | 78 | 65 |
| | | Evaluation results | (-) | good | exc. | good | exc. | exc. | exc. | exc. | exc. | exc. | good | pass | pass | exc. | exc. |
| | Moldability | MFR (200°C, 5 kg load) | (g/10 min) | 9.1 | 8.6 | 7.9 | 12.2 | 11.5 | 10.3 | 20.0 | 19.0 | 17.0 | 10.0 | 8.8 | 8.5 | 28.0 | 28.0 |
| | | Evaluation results | (-) | good | good | good | exc. | exc. | exc. | exc. | exc. | exc. | exc. | exc. | exc. | exc. | exc. |
| | Other properties | Impact strength | (J/mm) | 1.9 | 2.1 | 1.8 | 2.1 | 1.8 | 1.9 | 2.2 | 1.7 | 1.9 | 1.9 | 1.9 | 1.9 | 2.3 | 2.6 |
| | | Evaluation results | (-) | good | exc. | good | exc. | good | good | exc. | good | good | good | good | good | exc. | exc. |

**[Table 2]**

| | | | | Ex. 15 | Ex. 16 | Ex. 17 | Ex. 18 | Ex. 19 | Ex. 20 | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|---|---|---|---|---|---|---|---|
| Resin Composition | Eggshell powder (A) | Component (A-1) | (parts by mass) | 50 | 50 | 50 | 30 | 40 | 52.6 | 50 | 50 | 50 | 50 | 50 | 50 | 50 |
| | Polystyrene-based resin (B) | Component (b1-1) | (parts by mass) | | 30 | 30 | | | 23.7 | 30 | 30 | 30 | 30 | 30 | 30 | 30 |
| | | Component (b2-1) | (parts by mass) | 40 | | | | | | | | | | | | |
| | | Component (b3-1) | (parts by mass) | 10 | 20 | 20 | | | 23.7 | 20 | 20 | 20 | 20 | 20 | 20 | 20 |
| | | Component (b4-1) | (parts by mass) | | | | 70 | 60 | | | | | | | | |
| | Additive (C) | Compound (c1) | (parts by mass) | 1 | 1 | 1 | 1 | 1 | 1 | | | | | 1 | 1 | 1 |
| | | Compound (c2) | (parts by mass) | 2 | 3 | 3 | 2 | 2 | 2 | | | | | | | |
| | | Compound (c3) | (parts by mass) | | | | | | | | | | | | | |
| | | Zinc stearate | (parts by mass) | | | | | | | | 1 | | | 2 | | |
| | | Polyethylene wax | (parts by mass) | | | | | | | | | 1 | | | 2 | |
| | | Stearic acid | (parts by mass) | | | | | | | | | | 1 | | | 2 |
| | | Plasticizer 1 | (parts by mass) | 1 | 0.5 | | | | | | | | | | | |
| | | Plasticizer 2 | (parts by mass) | | | 0.5 | | | | | | | | | | |
| | Percentage of total amount of compounds (c1) to (c3) in additive (C) | | (mass%) | 66.7 | 85.7 | 85.7 | 100.0 | 100.0 | 100.0 | 0 | 0 | 0 | 0 | 33 | 33 | 33 |
| Evaluation Results | Mechanical properties | Tensile modulus | (MPa) | 1422 | 1246 | 1198 | 1570 | 1680 | 1320 | 1208 | 1246 | 1222 | 1359 | 1269 | 1222 | 1495 |
| | | Evaluation results | (-) | exc. | exc. | good | exc. | exc. | exc. | exc. | exc. | exc. | exc. | exc. | exc. | exc. |
| | | Tensile elongation at break | (%) | 27 | 57 | 62 | 19 | 15 | 52 | 10 | 7 | 5 | 6 | 5 | 1 | 4 |
| | | Evaluation results | (-) | good | exc. | exc. | pass | pass | exc. | fail | fail | fail | fail | fail | fail | fail |
| | Moldability | MFR (200°C, 5 kg load) | (g/10 min) | 15.8 | 22.6 | 23.2 | - | - | 16.0 | 3.1 | 3.1 | 3.1 | 3.1 | 6.7 | 6.7 | 6.7 |
| | | MFR (220°C, 10 kg load) | (g/10 min) | - | - | - | 18.1 | 13.1 | - | - | - | - | - | - | - | - |
| | | Evaluation results | (-) | exc. | exc. | exc. | exc. | exc. | exc. | fail | fail | fail | fail | good | good | good |
| | Other properties | Impact strength | (J/mm) | 1.7 | 1.9 | 2.0 | 3.7 | 2.5 | 2.1 | 1.9 | 1.9 | 1.9 | 1.9 | 1.9 | 1.9 | 1.9 |
| | | Evaluation results | (-) | good | good | exc. | exc. | exc. | exc. | good | good | good | good | good | good | good |

As shown in Tables 1 and 2, the resin compositions of Examples 1 to 20 satisfying the features of the present embodiment had good values in terms of tensile modulus and tensile elongation at break. Additionally, they also had good moldability. In contrast, the resin composition of Comparative Example 1 not containing the additive (C) had insufficient tensile elongation at break and had poor moldability. Furthermore, the resin compositions of Comparative Examples 2-4 in which additives (C) not containing compounds (c1) to (c3) were blended had even lower tensile elongations at break than the resin composition of Comparative Example 1. Furthermore, the moldabilities were also worse. Additionally, the resin compositions of Comparative Examples 5-7, in which the total amount of compounds (c1) to (c3) in the additive (C) was 50 mass% or less, had good moldability, yet had poor tensile elongations at break. From the above results, it was recognized that the resin composition according to the present embodiment has good properties in terms of tensile modulus and tensile elongation at break, and also has excellent moldability. The resin composition according to the present embodiment includes a certain amount of eggshell powder and therefore has little environmental impact.

### INDUSTRIAL APPLICABILITY

The resin composition according to the present embodiment according to the present embodiment has good properties in terms of tensile modulus and tensile elongation at break, and also has excellent moldability. Thus, it can be favorably used as a resin composition for injection molding. Additionally, the molded article according to the present embodiment has excellent properties in terms of tensile modulus and tensile elongation at break, and also includes a certain amount of eggshell powder, and is therefore a molded article with little environmental impact. Such a molded article is applicable to uses such as stationery, furniture, construction materials, tableware, containers, gardening materials, and toys.

## Claims

1. A resin composition containing eggshell powder (A), a polystyrene-based resin (B), and an additive (C), wherein:
a ratio of the eggshell powder (A) with respect to a total of 100 parts by mass of the eggshell powder (A) and the polystyrene-based resin (B) is 20 parts by mass or higher; and
the additive (C) includes at least one compound selected from among fatty acid amides (c1), fatty acid sodium salts (c2), and fatty acid esters (c3), a total content of the fatty acid amides (c1), the fatty acid sodium salts (c2), and the fatty acid esters (c3) with respect to an overall mass of the additive (C) is more than 50 mass%, and a content of the additive (C) with respect to a total of 100 parts by mass of the eggshell powder (A) and the polystyrene-based resin (B) is 10 parts by mass or less.

2. The resin composition according to claim 1, wherein the ratio of the eggshell powder (A) with respect to a total of 100 parts by mass of the eggshell powder (A) and the polystyrene-based resin (B) is 70 parts by mass or less.

3. The resin composition according to claim 1 or 2, wherein the resin composition has an MFR, under conditions with a load of 5 kg at 200 °C, of 4.0 g/10 min or higher.

4. The resin composition according to claim 1 or 2, wherein the resin composition has an MFR, under conditions with a load of 10 kg at 220 °C, of 4.0 g/10 min or higher.

5. The resin composition according to claim 1 or 2, wherein the polystyrene-based resin (B) includes a styrene-butadiene copolymer resin (b3) and at least one resin selected from among general-purpose polystyrene resins (b1) and high-impact polystyrene resins (b2).

6. The resin composition according to claim 1 or 2, wherein the polystyrene-based resin (B) includes an acrylonitrile-butadiene-styrene copolymer resin (b4).

7. The resin composition according to claim 1 or 2, wherein an average particle diameter of the eggshell powder (A) is 3-50 µm.

8. The resin composition according to claim 1 or 2, for injection molding.

9. A molded article containing the resin composition according to claim 1 or 2.
